Europäisches Patentamt

European Patent Office

Office européen des brevets

(19)

(11) Veröffentlichungsnummer: **0 429 702 A1**

(12) ## EUROPÄISCHE PATENTANMELDUNG

(21) Anmeldenummer: 89121989.1

(22) Anmeldetag: 29.11.89

(51) Int. Cl.5: **F16H 1/32**

Ein Antrag gemäss Regel 88 EPÜ auf Berichtigung des Anspruchs 1 liegt vor. Über diesen Antrag wird im Laufe des Verfahrens vor der Prüfungsabteilung eine Entscheidung getroffen werden (Richtlinien für die Prüfung im EPA, A-V, 2.2).

(43) Veröffentlichungstag der Anmeldung:
05.06.91 Patentblatt 91/23

(84) Benannte Vertragsstaaten:
**CH DE ES FR GB IT LI Patentblatt 3**

(71) Anmelder: **Shi, Yonggang, Prof.**
**Dep.of Mechanical Engineering Zheijlang University**
**Hangzhou Zheijiang(CN)**

Anmelder: **Dittrich, Günter, Prof. Dr.-Ing.**
**Adele-Weidtman-Strasse 44**
**W-5100 Aachen(DE)**

Anmelder: **Jahr, Andreas, Dipl.-Ing.**
**Adolfstrasse 72**
**W-4040 Neuss 1(DE)**

(72) Erfinder: **Shi, Yonggang, Prof.**
**Dep.of Mechanical Engineering Zheijiang University**
**Hangzhou Zheijiang(CN)**
Erfinder: **Dittrich, Günter, Prof. Dr.-Ing.**
**Adele-Weidtman-Strasse 44**
**W-5100 Aachen(DE)**
Erfinder: **Jahr, Andreas, Dipl.-Ing.**
**Adolfstrasse 72**
**W-4040 Neuss 1(DE)**

(74) Vertreter: **Kern, Wolfgang, Dipl.-Ing. et al**
**Patentanwälte Kern, Brehm & Partner**
**Albert-Rosshaupter-Strasse 73**
**W-8000 München 70(DE)**

(54) **Hochuntersetzendes Getriebe mit einer verschlungenen Zykloide im Eingriff.**

(57) Getrieb mit einem Umlaufrad (20), welches rollenförmige Zähne (19) aufweist und exzentrisch zur Drehachse seines Gegenrades (22) gelagert ist. Das Gegenrad besitzt Zahnflanken (21a,21b) in der Form einer Äquidistanten - mit dem Abstand des Rollenradius - von der verschlungenen Zykloide der Rollenmittelpunkte. Liegen alle Übertragungselemente innerhalb der Polbahnen von Umlaufrad und Gegenrad, so baut das Getriebe klein und es treten geringe Flächenpressungen an.

EP 0 429 702 A1

Fig. 3

# EP 0 429 702 A1

## HOCHUNTERSETZENDES GETRIEBE MIT EINER VERSCHLUNGENEN ZYKLOIDE IM EINGRIFF

Die Erfindung betrifft ein hochuntersetzendes Getriebe mit einer verschlungenen Zykloide im Eingriff gemäß dem Oberbegriff des Anspruchs 1.

Bei den Umlaufrädergetrieben beschreiben Punkte auf den Umlaufrädern Radlinien (Trochoiden), die gewöhnlich als Zykloiden bezeichnet werden. In Umlaufrädergetrieben mit Triebstockverzahnung, bei denen entweder das Umlaufrad oder das Mittelrad kreisbolzenförmige Zähne besitzen, werden Zykloiden zur Bildung der Gegenzahnkontur ausgenutzt. Bei bekannten Zykloidengetrieben (deutsche Patentschriften 459 025, 459 774, 464 992 und 574 504) steht ein Rollenkörper mit der Äquidistanten einer Epizykloide oder einer geschweiften Epizykloide in Eingriff.

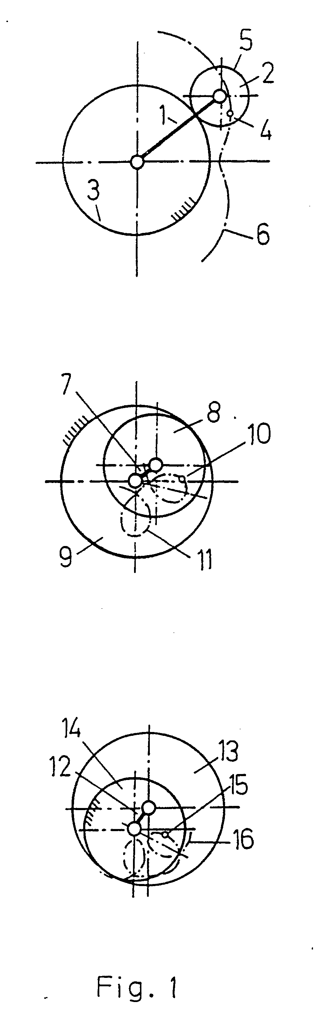

Zur Erläuterung dieses Standes der Technik wird auf die in Fig. 1 schematisch dargestellten drei unterschiedlichen, einstufigen Umlaufrädergetriebe verwiesen. Das erste mit dem feststehenden außenverzahnten Mittelrad 3, dem umlaufenden Steg 1 und dem mit dem Mittelrad 3 in Eingriff stehenden, außenverzahnten Umlaufrad 2 beschreibt durch einen Punkt 4, der fest auf dem Umlaufrad 2 angeordnet ist, eine Epizykloide. Liegt der Punkt 4 außerhalb des Wälzkreises 5 des Umlaufrades 2, so beschreibt er eine nicht dargestellte verschlungene Epizykloide, liegt er innerhalb des Wälzkreises 5, eine geschweifte Epizykloide 6. Für einen Punkt auf dem Wälzkreis 5 ergibt sich eine gespitzte Kurve.

Man bezeichnet eine Zykloide dann als verschlungen, wenn man bei einmaligem Durchfahren einen oder mehrer Punkte mindestens zweimal durchläuft. Bei geschweiften Kurven wird jeder Punkt bei einmaligem Durchfahren nur einmal durchlaufen. Den Übergang zwischen geschweiften und verschlungenen Kurven bilden die gespitzten Kurven.

Wenn, wie in Fig. 1 dargestellt, ein Steg 7 ein außenverzahntes Umlaufrad 8 trägt, das auf einem feststehenden, innenverzahnten Mittelrad 9 abwälzt, beschreibt ein Punkt 10 eine Hypozykloide 11, die ebenfalls verschlungen, gespitzt oder geschweift sein kann. Trägt ein Steg 12 ein innenverzahntes Umlaufrad 13, welches auf einem außenverzahnten Mittelrad 14 abrollt, so beschreibt ein Punkt 15 des Umlaufrades eine Perizykloide 16. Mathematisch besteht kein Unterschied zwischen Peri- und Epizykloiden. Allgemein gilt, daß die Zykloiden verschlungen sind, wenn der erzeugende Punkt auf dem Umlaufrad 4, 10, 15 und der Mittelpunkt des Mittelrades entweder innerhalb oder außerhalb des Umlaufradwälzkreises liegen. Die Zykloiden sind geschweift, wenn von den beiden Punkten einer innerhalb und einer außerhalb des Umlaufradwälzkreises liegt.

Das aus dem o.a. Stand der Technik bekannte Zykloidengetriebe weist folgende Eigenschaften auf.

Das Übersetzungsverhältnis zwischen der Antriebs- und der Abtriebswelle ist $i = -z$, wobei $z$ die Anzahl der Zähne der Kurvenscheibe ist. Die Epizykloide oder die geschweifte Epizykloide und ihre Äquidistanten, also die Zahnkontur des Umlaufrades, liegen außerhalb der relativen Wälzkreise des Umlaufrades und des festen Mittelrades. Die Zahnhöhe des Umlaufrades ist doppelt so groß wie die Exzentrizität, welche der Steglänge entspricht. Der Komplementwinkel zum Eingriffwinkel hat eine veränderliche Größe von annähernd 0 Grad bis 48,6 Grad. Während der Übertragung steht die konvexe Zahnkontur des Umlaufrades mit der konvexen Außenrolle in Berührung.

Das bekannte Zykloidengetriebe hat die folgenden Nachteile.

Die Übertragungselemente des Getriebes liegen außerhalb der Wälzkreise, wodurch ein großer Bauraum erforderlich ist, Wenn das Übersetzungsverhältnis des Getriebes vorgegeben wird, ist die Abmessung des Getriebes durch diese Vorgabe so festgelegt, daß eine ausreichende Zahnhöhe des Umlaufrades gewährleistet sein muß. Wegen des kleinen Betrages des maximalen Komplementwinkels zum Eingriffswinkel ist die Normalkraft zwischen der Zahnkontur des Umlaufrades und der Außenrolle im Vergleich zum Kräftepaar des Abtriebmomentes groß. Wegen des Eingriffs zweier konvexer Kurven ist die Flächenpressung zwischen dem Umlaufrad und der Außenrolle sehr hoch.

Die Aufgabe der Erfindung besteht deshalb darin, ein gattungsgemäßes Getriebe so weiterzubilden, daß die Baugröße verkleinert und gleichzeitig die Normalkräfte und die Flächenpressung an den im Eingriff befindlichen Zähnen vermindert werden.

Diese Aufgabe wird gemäß dem Kennzeichen des Anspruchs 1 gelöst. Grundgedanke dieser Lösung ist eine Punktverzahnung mit verschlungener Zykloide, wofür sowohl die Hypo- als auch die Peri- bzw. Epizykloide infrage kommen.

Eine vorteilhafte Ausgestaltung des Erfindungsvorschlags kennzeichnet sich dadurch, daß die Äquidistante durch Radien mit unterschiedlichen Abmessungen gebildet ist. Die Lösung der genannten Aufgabe konkretisiert sich detaillierter in einer Konstruktion, die dadurch gekennzeichnet ist, daß der eine Zahn einer sich in Eingriff befindlichen Zahnpaarung die Form eines Kreisbolzens aufweist und der Gegenzahn des entsprechenden Zahnpaares die Kontur einer Äquidistanten einer verschlungenen Zykloide hat.

3

Weitere vorteilhafte Ausgestaltungen der Erfindung sind den Ansprüchen 4 bis 7 zu entnehmen.

Die Erfindung wird nachfolgend anhand der in der Zeichnung dargestellten Ausführungsbeispiele näher erläutert. In der Zeichnung zeigen:

Fig. 1 die schematische Darstellung dreier unterschiedlicher bekannter einstufiger Umlaufrädergetriebe,

Fig. 2 die Darstellung einer geschlossenen verschlungenen Hypozykloide in Verbindung mit der erfindungsgemäßen Getriebekonstruktion,

Fig. 3 eine schematische Darstellung des erfindungsgemässen Getriebes mit verschlungener Hypozykloide im Eingriff, wobei alle Übertragungselemente des Getriebes innerhalb der Wälzkreise liegen,

Fig. 4 die Gegenüberstellung zweier Eingriffsarten der Zykloidegetriebe,

Fig. 5 eine Längsschnittansicht eines einstufigen erfindungsgemäßen Getriebes mit verschlungener Hypozykloide im Eingriff,

Fig. 6 eine entsprechende schematische Schnittdarstellung des Abtriebsgetriebes,

Fig. 7 eine Längsschnittansicht einer anderen Ausführungsform des einstufigen Getriebes mit doppelter Anordnung des Umlaufrades,

Fig. 8 eine Längsschnittansicht eines zweistufigen Getriebes,

Fig. 9 eine schematische Schnittansicht der zweiten Getriebestufe senkrecht zur Getriebeachse,

Fig.10 eine zur Tafel 1 gehörende schematische Darstellung für das Übersetzungsverhältnis des zweistufigen Untersetzungsgetriebes in Abhängigkeit von den Zähnezahlen,

Fig.11 eine Längsschnittansicht des zweistufigen Umlaufrädergetriebes mit einem Doppelexzenter und zwei Umlaufrädern,

Fig.12 eine schematische Darstellung des Untersetzungsgetriebes mit verschlungener Epizykloide im Eingriff,

Fig.13 eine Längsschnittansicht des einstufigen Untersetzungsgetriebes,

Fig.14 eine schematische Schnittansicht des Untersetzungsgetriebes senkrecht zur Getriebeachse,

Fig.15 eine entpsrechende schematische Schnittansicht des Abtriebsgetriebes,

Fig.16 eine Längsschnittansicht eines zweistufigen Untersetzungsgetriebes,

Fig.17 eine schematische Schnittansicht der beiden Stufen des Getriebes von Fig.16,

Fig.18 eine zur Tafel 2 bezogene schematische Ansicht des Übersetzungsverhältnisses des zweistufigen Untersetzungsgetriebes in Abhängigkeit von den Zähnezahlen,

Fig.19 eine schematische Schnittansicht des Untersetzungsgetriebes zur Verdeutlichung der Tatsache, daß die Bewegungszustände des Umlaufrades und des Gestells vertauscht werden können,

Fig.20 eine schematische Darstellung des erfindungsgemäßen Getriebes als teilweise geschnittene Vorderansicht, wobei die verschlungene Epizykloide durch Kreiszylinder angenähert ist,

Fig.21 eine schematische Detailansicht einer prinzipiell der Konstruktion von Fig. 20 entsprechenden Getriebekonstruktion, und

Fig.22 eine schematische Schnittansicht einer weiteren Ausführungsform der erfindungsgemäßen Konstruktion eines Untersetzungsgetriebes senkrecht zur Antriebswelle.

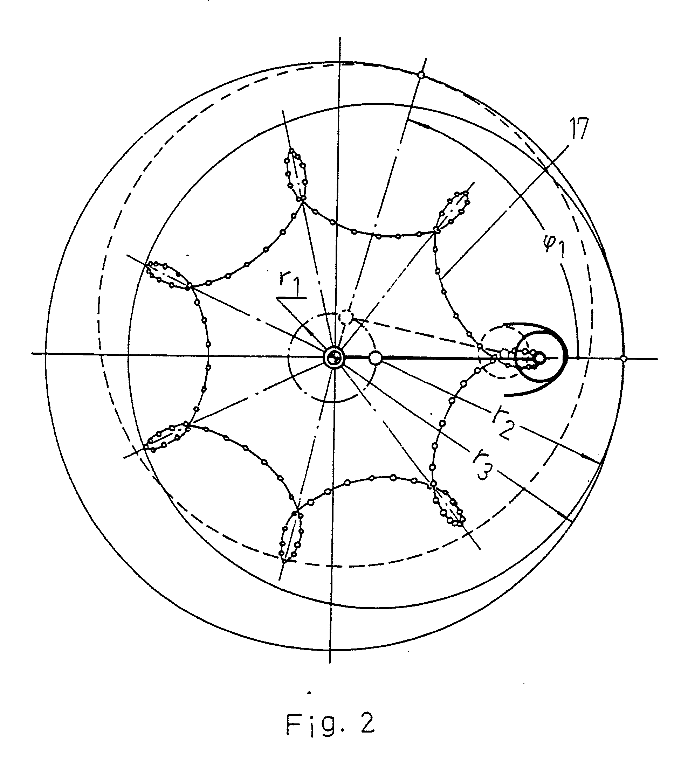

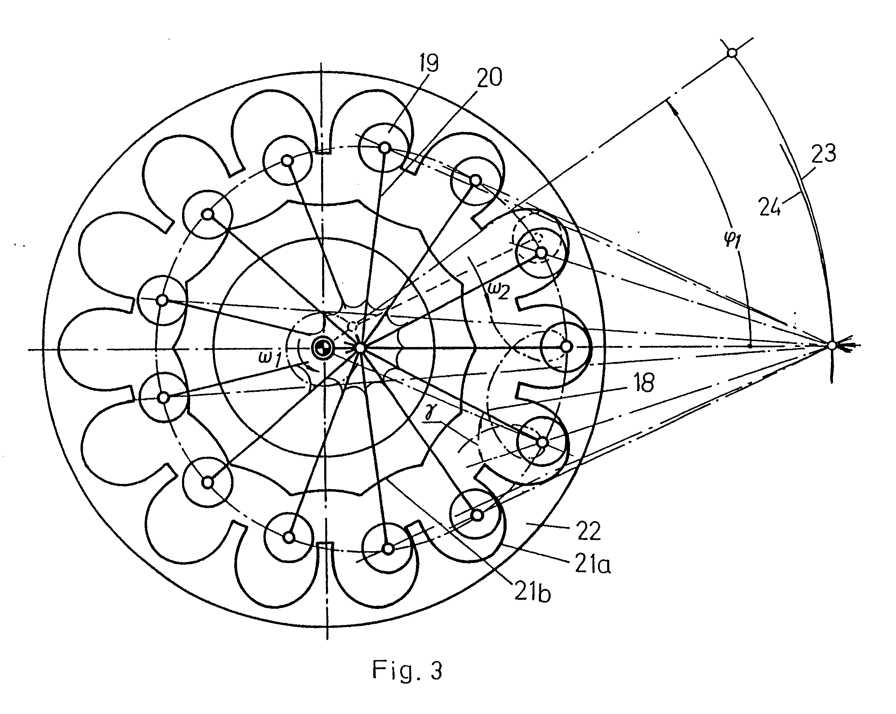

Fig. 2 zeigt die Getriebebauform mit einer geschlossenen, verschlungenen Hypozykloide 17. Eine Zykloide bezeichnet man dann als verschlungen, wenn man bei einmaligem Durchfahren einen oder mehrere Punkte mindestens zweimal durchläuft (Doppelpunkte). Wenn das Verhältnis des Radius des Wälzkreises $r_2$ zur Exzentrizität $r_1$ eine rationale Zahl ist, ist die Zykloide geschlossen. In Fig. 3 wird die Darstellung des vorgeschlagenen Getriebes mit verschlungener Hypozykloide im Eingriff gezeigt. Die kreisbolzenförmigen Rollen 19 befinden sich auf dem Umlaufrad 20, und der Mittelpunkt einer Rolle fällt in der gezeigten Stellung mit einem Scheitelpunkt der verschlungenen Hypozykloide zusammen. Die konkave Zahnkontur 21a, 21b des Gestells 22 ist die Äquidistante der verschlungenen Hypozykloide mit dem Abstand, der dem Radius der Rolle entspricht. Wegen der sich kreuzenden Hypozykloide ist die Äquidistante nicht geschlossen. Daher ist die Rolle 19 des Umlaufrades 20 und der entsprechende Zahn des Gestells nicht ständig im Eingriff. Es sind jedoch mehrere Rollen gleichzeitig im Eingriff. Daher kann der kontinuierliche Lauf des Getriebes erreicht werden.

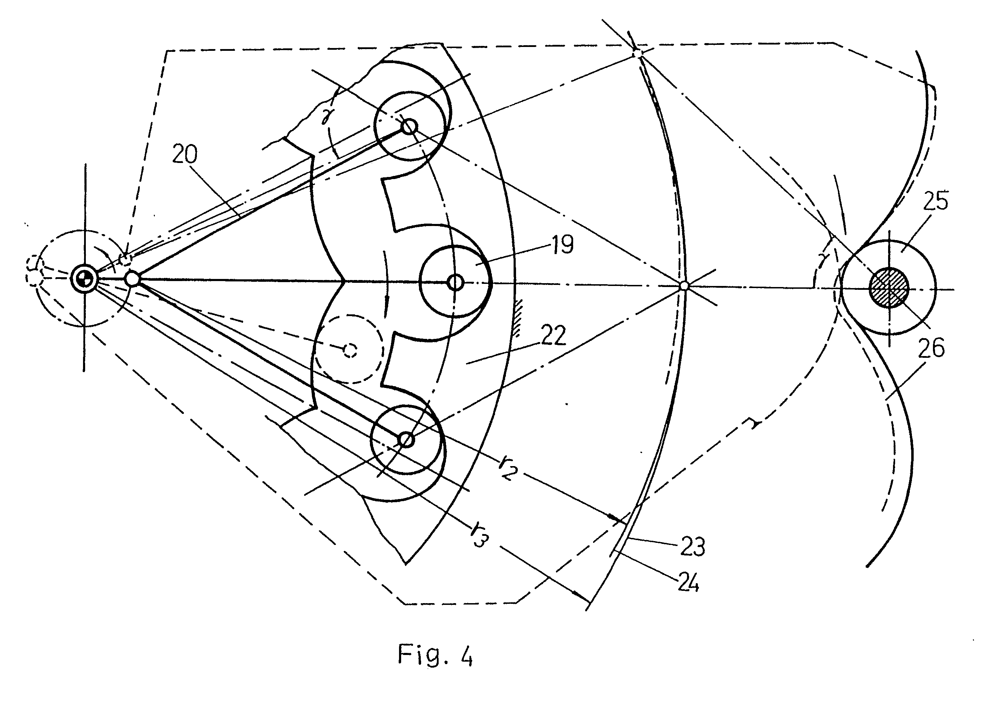

Nach Fig. 3 liegen alle Übertragungselemente des Getriebes innerhalb der Wälzkreise, das sind die Polbahnen des Umlaufrades 24 und des Gestells 23. Somit können die Abmessungen des Getriebes klein gehalten werden. Das Maximum des Komplementwinkels $\gamma'$ zum Eingriffswinkel ist 90 Grad, daher wird die Normalkraft kleiner als beim bekannten Zykloidengetriebe sein. Weiter ist die konkave Zahnkontur mit der konvexen Rolle im Eingriff. Deshalb wird auch die Flächenpressung gering sein. Fig. 4 zeigt den Vergleich der zwei Eingriffsarten. Bei dem bekannten Zykloidegetriebe ist die Rolle 25 die Zahnform des Mittelrades und die Scheibe 26 die des Umlaufrades.

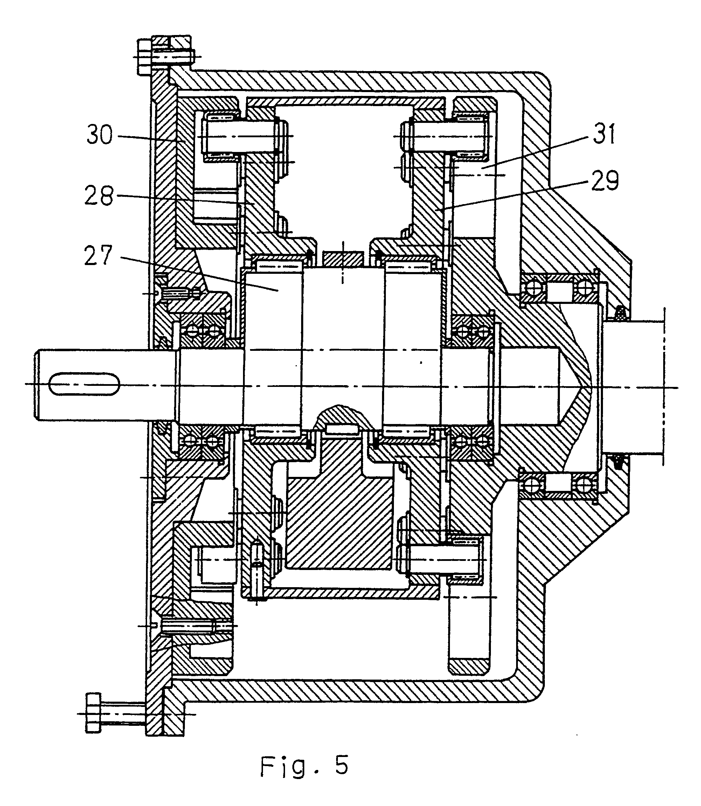

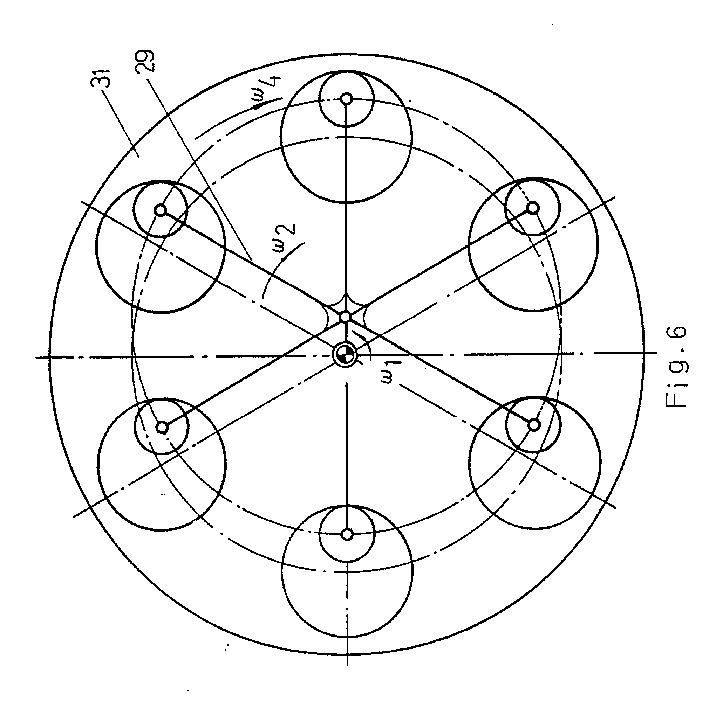

Das erfindungsgemäße Getriebe kann in einer Getriebestufe oder in zwei oder mehreren Getriebestufen gebaut werden. Fig. 5 zeigt die Schnittzeichnung des einstufigen Getriebes mit verschlungener Hypozykloide im Eingriff. Aus dem Exzenter 27, den Umlaufrädern 28 und 29 und dem Gestell 30 setzt sich ein Untersetzungsgetriebe zusammen und die Glieder 29 und 31 bilden das Abtriebsgetriebe mit gleichförmig übersetzter Drehgeschwindigkeit. Fig. 3 zeigt den schemati schen Schnitt des Untersetzungsgetriebes senkrecht zur Getriebeachse. Fig. 6 zeigt den entsprechenden schematischen Schnitt des Abtriebsgetriebes.

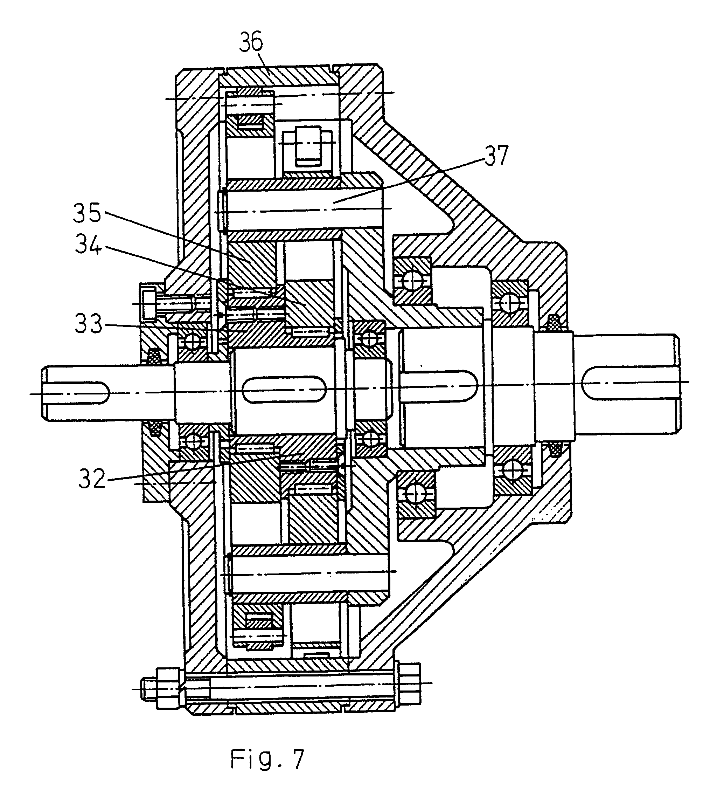

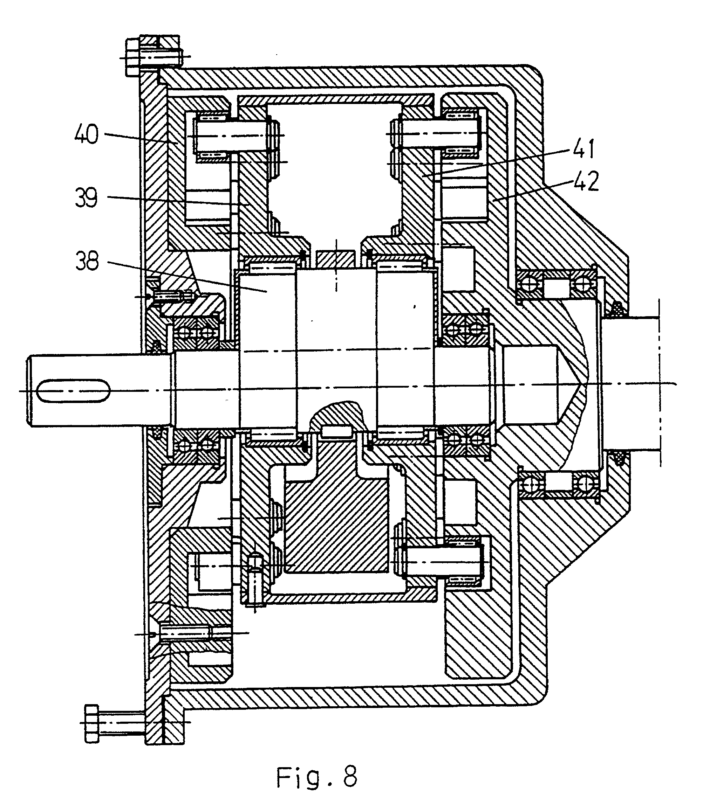

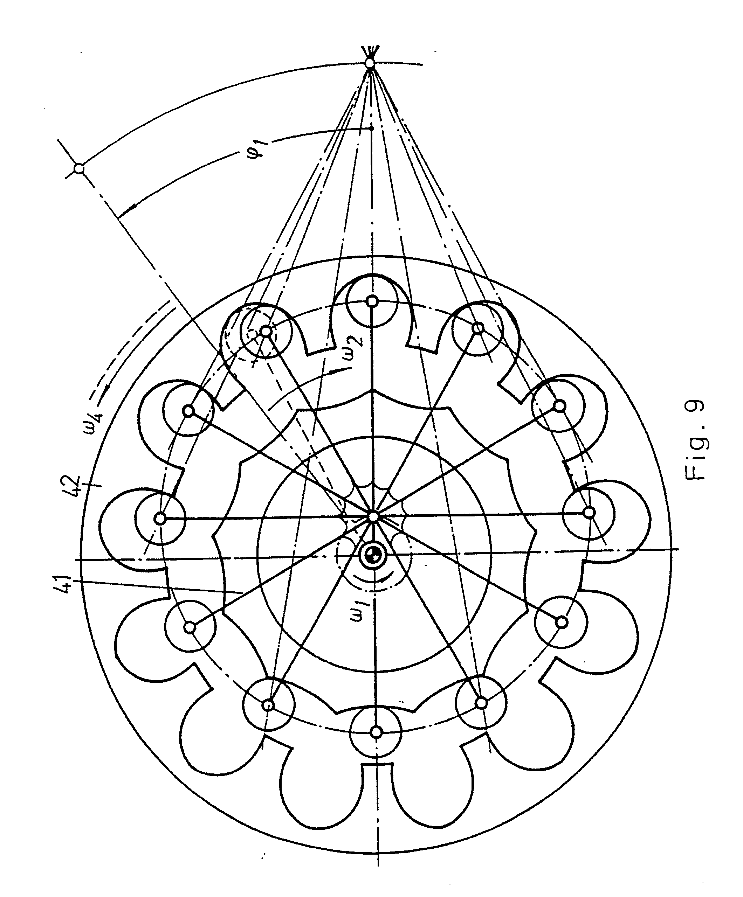

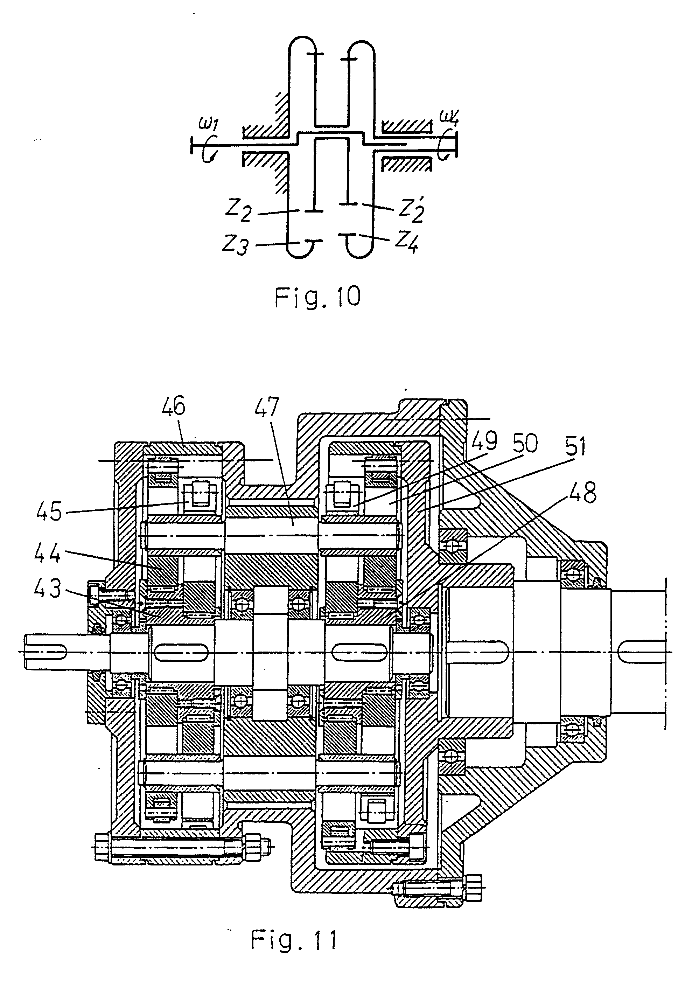

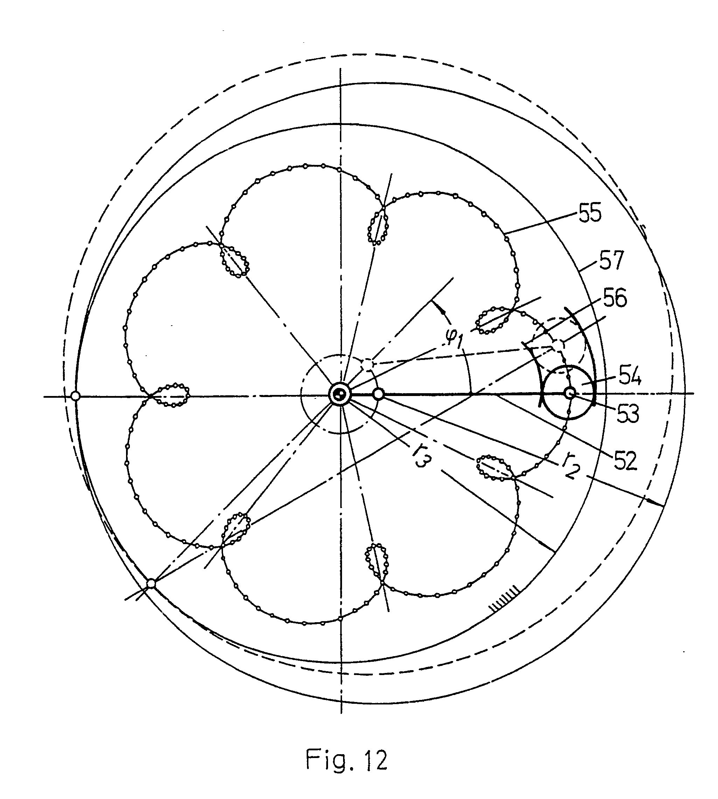

Fig. 7 zeigt eine andere Struktur des einstufigen Getriebes, in dem die zwei Exzentrizitäten 32 und 33 des Doppelexzenters und die zwei Umlaufräder 34 und 35 um 180 Grad entsprechend versetzt werden. Die Doppelexzenter, die beiden Umlaufräder und das innenverzahnte Gestell 36 bilden die Untersetzungsstufe. Der Mitnehmer 37 führt die verminderte Drehgeschwindigkeit aus. Bei dieser Struktur soll die teilweise Zahnkontur 21b (siehe Fig.3) nicht hergestellt werden. Für ein höheres Übersetzungsverhältnis kann man ein zweistufiges Getriebe verwenden, das in Fig. 8 gezeigt wird. Die Glieder 38, 39 und 40 bilden die erste Stufe und die Glieder 38, 41 und 42 die zweite Stufe. Der schematische Schnitt der zweiten Stufe senkrecht zur Getriebeachse wird in Fig. 9 gezeigt. Das Übersetzungsverhältnis des zweistufigen Untersetzungsgetriebes und Abhängigkeit von den Zähnezahlen wird in Tafel 1 in Fig. 10 angegeben. Jede Getriebestufe des zweistufigen Umlaufrädergetriebes kann auch mit einem Doppelexzenter und zwei Umlaufrädern konstruiert werden. Fig. 11 zeigt seine Struktur, in der der Doppelexzenter 43, die Umlaufräder 44, 45 und das innenverzahnte Gestell 46 die erste Stufe und der Mitnehmer 47, die Umlaufräder 49, 50, das innenverzahnte Mittelrad 51 und der Doppelexzenter 48 die zweite Stufe bilden. Durch den Mitnehmer 47 drehen sich die Umlaufräder 44, 50 (und auch die Umlaufräder 45, 49) in gleichem Drehsinn und gleicher Geschwindigkeit.

Ein Punkt auf einem Rollkreis, der auf einem feststehenden Wälzkreis abrollt, beschreibt eine Epizykloide, wenn entweder der Rollkreis mit seiner Außenseite auf dem Wälzkreis oder mit seiner Innenseite um den Wälzkreis abrollt. Im zweiten Fall muß der Rollkreis größer als der Wälzkreis sein; man spricht dann auch von einer Perizykloide. In Fig. 12 wird die schematische Darstellung des Unterset

## Tafel 1

$$i_{14} = \frac{\omega_1}{\omega_4} = \frac{Z_4 Z_2}{Z_4 Z_2 - Z_3 Z_2'} \qquad (Fig.\ 10)$$

| $Z_2$ | $Z_2'$ | $Z_3$ | $Z_4$ | $i_{14}$ | | $Z_2$ | $Z_2'$ | $Z_3$ | $Z_4$ | $i_{14}$ |
|---|---|---|---|---|---|---|---|---|---|---|
| 9 | 8 | 10 | 9 | 81 | | 9 | 10 | 10 | 11 | − 99 |
| 10 | 9 | 11 | 10 | 100 | | 10 | 11 | 11 | 12 | − 120 |
| 11 | 10 | 12 | 11 | 121 | | 11 | 12 | 12 | 13 | − 143 |
| 12 | 11 | 13 | 12 | 144 | | 12 | 13 | 13 | 14 | − 168 |
| 13 | 12 | 14 | 13 | 169 | | 13 | 14 | 14 | 15 | − 195 |
| 14 | 13 | 15 | 14 | 196 | | 14 | 15 | 15 | 16 | − 224 |
| 15 | 14 | 16 | 15 | 225 | | 15 | 16 | 16 | 17 | − 255 |
| 16 | 15 | 17 | 16 | 256 | | 16 | 17 | 17 | 18 | − 288 |
| 17 | 16 | 18 | 17 | 289 | | 17 | 18 | 18 | 19 | − 323 |
| 18 | 17 | 19 | 18 | 324 | | 18 | 19 | 19 | 20 | − 360 |
| 19 | 18 | 20 | 19 | 361 | | 19 | 20 | 20 | 21 | − 399 |
| 20 | 19 | 21 | 20 | 400 | | 20 | 21 | 21 | 22 | − 440 |
| 21 | 20 | 22 | 21 | 441 | | 21 | 22 | 22 | 23 | − 483 |
| 22 | 21 | 23 | 22 | 484 | | 22 | 23 | 33 | 24 | − 528 |
| 23 | 22 | 24 | 23 | 529 | | 23 | 24 | 34 | 25 | − 575 |
| 24 | 23 | 25 | 24 | 576 | | 24 | 25 | 25 | 26 | − 624 |
| 25 | 24 | 26 | 25 | 625 | | 25 | 26 | 26 | 27 | − 675 |
| 26 | 25 | 27 | 26 | 676 | | 26 | 27 | 27 | 28 | − 728 |
| 27 | 26 | 28 | 27 | 729 | | 27 | 23 | 28 | 29 | − 783 |
| 28 | 27 | 29 | 28 | 784 | | 28 | 29 | 29 | 30 | − 840 |
| 29 | 28 | 30 | 29 | 841 | | 29 | 30 | 30 | 31 | − 899 |
| 30 | 29 | 31 | 30 | 900 | | 30 | 31 | 31 | 32 | − 960 |
| 31 | 30 | 32 | 31 | 961 | | 31 | 32 | 32 | 33 | − 1023 |
| 32 | 31 | 33 | 32 | 1024 | | 32 | 33 | 33 | 34 | − 1088 |
| 33 | 32 | 34 | 33 | 1089 | | 33 | 34 | 34 | 35 | − 1155 |
| 34 | 33 | 35 | 34 | 1156 | | 34 | 35 | 35 | 36 | − 1224 |
| 35 | 34 | 36 | 35 | 1225 | | 35 | 36 | 36 | 37 | − 1295 |
| 36 | 35 | 37 | 36 | 1296 | | 36 | 37 | 37 | 38 | − 1368 |
| 37 | 36 | 38 | 37 | 1369 | | 37 | 38 | 38 | 39 | − 1443 |
| 38 | 37 | 39 | 38 | 1444 | | 38 | 39 | 39 | 40 | − 1520 |
| 39 | 38 | 40 | 39 | 1521 | | 39 | 40 | 40 | 41 | − 1599 |
| 40 | 39 | 41 | 40 | 1600 | | 40 | 41 | 41 | 42 | − 1680 |
| 41 | 40 | 42 | 41 | 1681 | | 41 | 42 | 42 | 43 | − 1763 |
| 42 | 41 | 43 | 42 | 1764 | | 42 | 43 | 43 | 44 | − 1848 |
| 43 | 42 | 44 | 43 | 1849 | | 43 | 44 | 44 | 45 | − 1935 |
| 44 | 43 | 45 | 44 | 1936 | | 44 | 45 | 45 | 46 | − 2024 |
| 45 | 44 | 46 | 45 | 2025 | | 45 | 46 | 46 | 47 | − 2115 |
| 46 | 45 | 47 | 46 | 2116 | | 46 | 47 | 47 | 48 | − 2208 |
| 47 | 46 | 48 | 47 | 2209 | | 47 | 48 | 48 | 49 | − 2303 |
| 48 | 47 | 49 | 48 | 2304 | | 48 | 49 | 49 | 50 | − 2400 |
| 49 | 48 | 50 | 49 | 2401 | | 49 | 50 | 50 | 51 | − 2499 |
| 50 | 49 | 51 | 50 | 2500 | | 50 | 51 | 51 | 52 | − 2600 |

zungsgetriebes mit verschlungener Epizykloide im Eingriff gezeigt. Die Rolle 54 befindet sich auf dem Umlaufrad 52 und der Mittelpunkt 53 der Rolle 54 in der gezeigten Stellung auf einem Scheitelpunkt der verschlungenen Epizykloide 55. Die Zahnkontur 56 des Gestells 57 ist die Äquidistante der Epizykloide mit dem Abstand, der dem Radius der Rolle 54 entspricht.

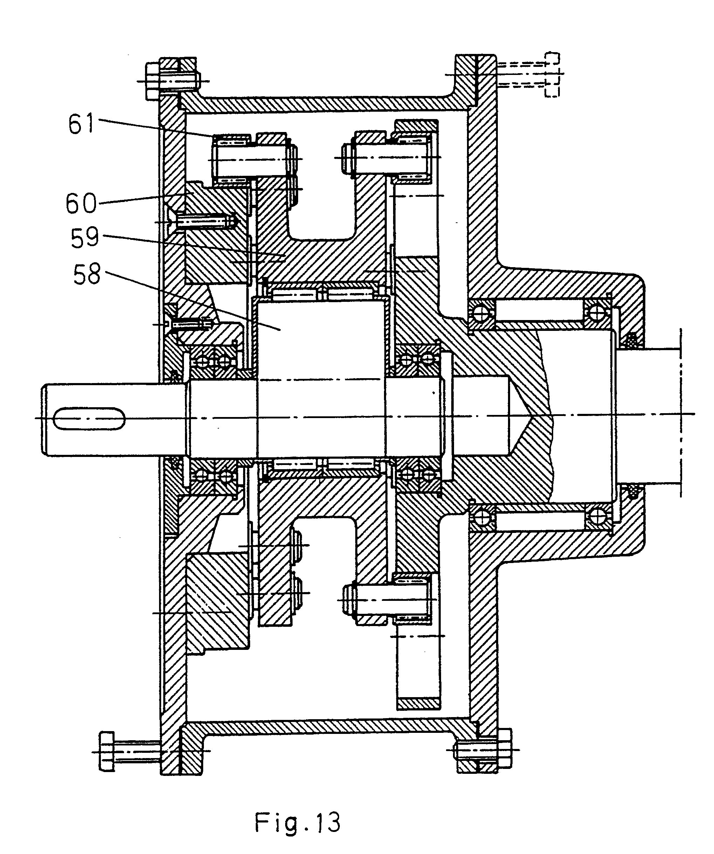

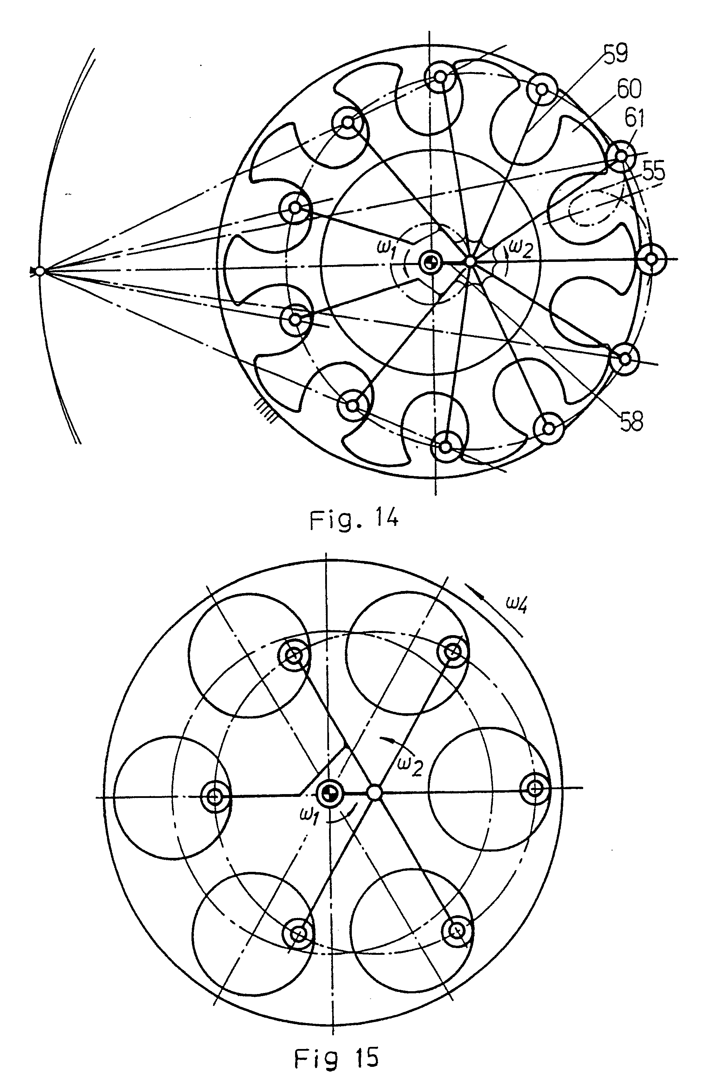

Das Getriebe kann wie das Hypozykloidengetriebe mit Epizykloidenverzahnung in einer Getriebestufe oder in zwei Getriebestufen gebaut werden. Fig. 13 zeigt die Schnittzeichnung des einstufigen Getriebes. Aus dem Exzenter 58, dem Umlaufrad 59 und dem Verzahnungsgestell 60 setzt sich ein Untersetzungsgetriebe zusammen. Fig. 14 zeigt den schematischen Schnitt des Untersetzungsgetriebes senkrecht zur Getriebeachse und Fig. 15 zeigt den entsprechenden schematischen Schnitt des Abtriebsgetriebes. Die Anzahl der Rollen 61 auf dem Umlaufrad 59 ist z und die Zähnezahl des Verzahnungsgestells 60 ist z-1.

Damit gilt für das Übersetzungsverhältnis $i_{1\,2}$ zwischen dem Exzenter 58 und dem Umlaufrad 59

$i_{1\,2} = z$.

Das positive Übersetzungsverhältnis bedeutet, daß die An-und Abtriebswelle den gleichen Drehsinn haben.

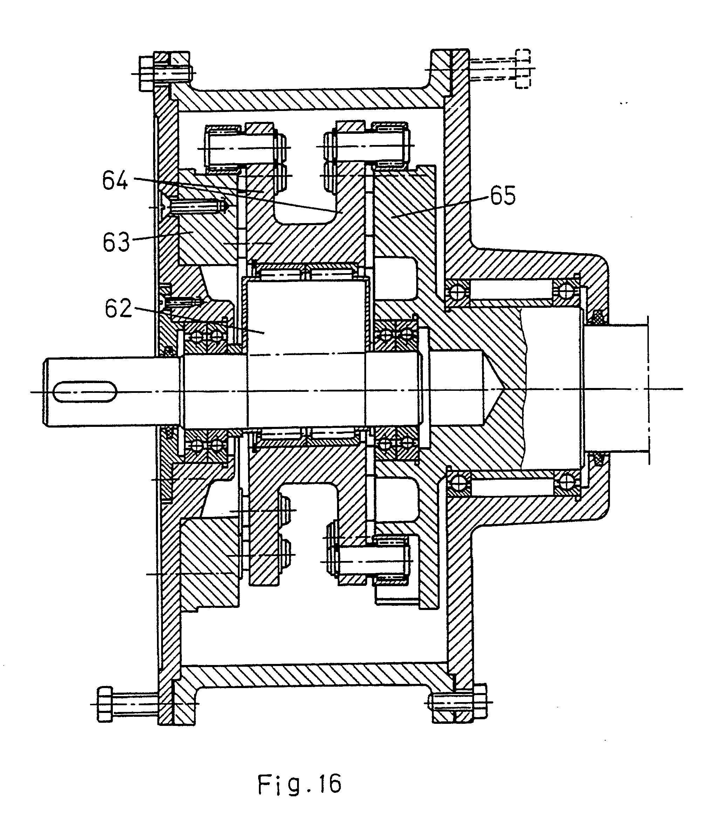

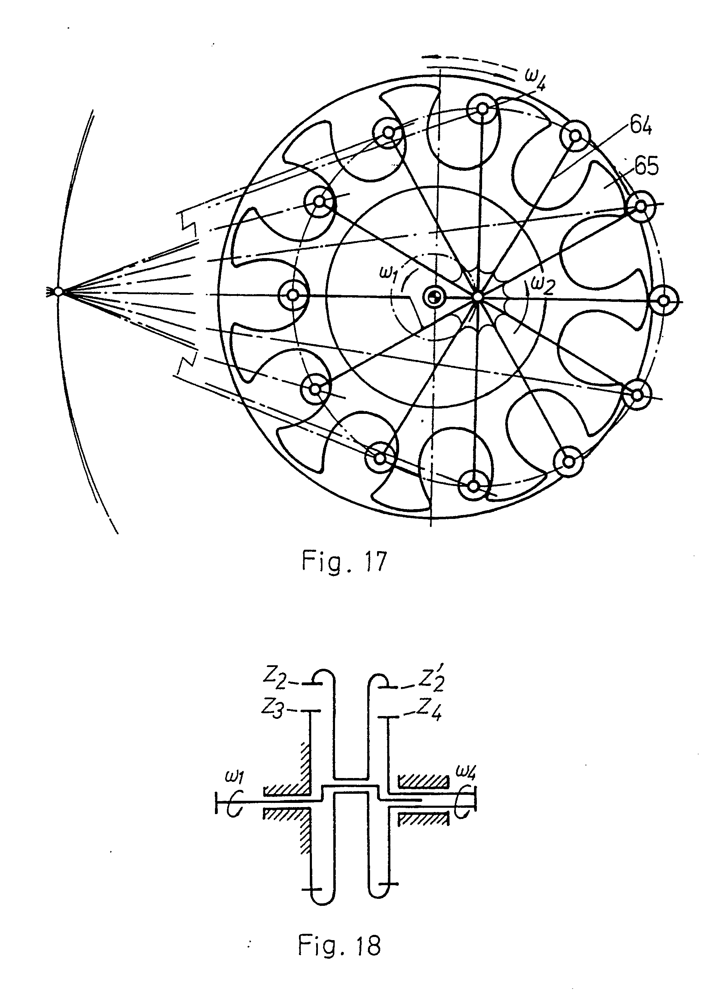

Für ein höheres Übersetzungsverhältnis kann man ein zweistufiges Getriebe verwenden, das in Fig. 16 gezeigt wird. Die Gleider 62, 63 und 64 bilden die erste Stufe, die Glieder 62, 64 und 65 die zweite (Fig. 17). Das Übersetzungsverhältnis des zweistufigen Untersetzungsgetriebes in Abhängigkeit von den Zähnezahlen wird in Tafel 2 in Fig. 18 angegeben.

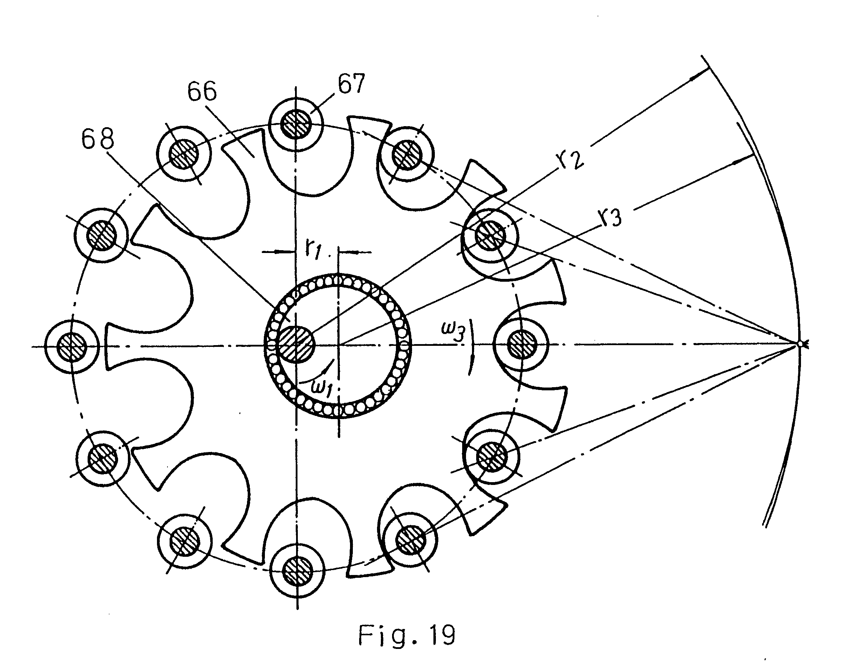

Die Bewegungszustände des Umlaufrades und des Gestells können auch vertauscht werden. Fig. 19 zeigt das entsprechende

## Tafel 2

$$i_{14} = \frac{\omega_1}{\omega_4} = \frac{Z_4 Z_2}{Z_4 Z_2 - Z_3 Z_2'} \quad (Fig.\ 18)$$

| $Z_3$ | $Z_2$ | $Z_2'$ | $Z_4$ | $i_{14}$ | $Z_3$ | $Z_2$ | $Z_2'$ | $Z_4$ | $i_{14}$ |
|---|---|---|---|---|---|---|---|---|---|
| 9 | 10 | 11 | 10 | 100 | 9 | 10 | 9 | 8 | − 80 |
| 10 | 11 | 12 | 11 | 121 | 10 | 11 | 10 | 9 | − 99 |
| 11 | 12 | 13 | 12 | 144 | 11 | 12 | 11 | 10 | − 120 |
| 12 | 13 | 14 | 13 | 169 | 12 | 13 | 12 | 11 | − 143 |
| 13 | 14 | 15 | 14 | 196 | 13 | 14 | 13 | 12 | − 168 |
| 14 | 15 | 16 | 15 | 225 | 14 | 15 | 14 | 13 | − 195 |
| 15 | 16 | 17 | 16 | 256 | 15 | 16 | 15 | 14 | − 224 |
| 16 | 17 | 18 | 17 | 289 | 16 | 17 | 16 | 15 | − 255 |
| 17 | 18 | 19 | 18 | 324 | 17 | 18 | 17 | 16 | − 288 |
| 18 | 19 | 20 | 19 | 361 | 18 | 19 | 18 | 17 | − 323 |
| 19 | 20 | 21 | 20 | 400 | 19 | 20 | 19 | 18 | − 360 |
| 20 | 21 | 22 | 21 | 441 | 20 | 21 | 20 | 19 | − 399 |
| 21 | 22 | 23 | 22 | 484 | 21 | 22 | 21 | 20 | − 440 |
| 22 | 23 | 24 | 23 | 529 | 22 | 23 | 22 | 21 | − 483 |
| 23 | 24 | 25 | 24 | 576 | 23 | 24 | 23 | 22 | − 528 |
| 24 | 25 | 26 | 25 | 625 | 24 | 25 | 24 | 23 | − 575 |
| 25 | 26 | 27 | 26 | 676 | 25 | 26 | 25 | 24 | − 624 |
| 26 | 27 | 28 | 27 | 729 | 26 | 27 | 26 | 25 | − 675 |
| 27 | 28 | 29 | 28 | 784 | 27 | 28 | 27 | 26 | − 728 |
| 28 | 29 | 30 | 29 | 841 | 28 | 29 | 28 | 27 | − 783 |
| 29 | 30 | 31 | 30 | 900 | 29 | 30 | 29 | 28 | − 840 |
| 30 | 31 | 32 | 31 | 961 | 30 | 31 | 30 | 29 | − 899 |
| 31 | 32 | 33 | 32 | 1024 | 31 | 32 | 31 | 30 | − 960 |
| 32 | 33 | 34 | 33 | 1089 | 32 | 33 | 32 | 31 | − 1023 |
| 33 | 34 | 35 | 34 | 1156 | 33 | 34 | 33 | 32 | − 1088 |
| 34 | 35 | 36 | 35 | 1225 | 34 | 35 | 34 | 33 | − 1155 |
| 35 | 36 | 37 | 36 | 1296 | 35 | 36 | 35 | 34 | − 1224 |
| 36 | 37 | 38 | 37 | 1369 | 36 | 37 | 36 | 35 | − 1295 |
| 37 | 38 | 39 | 38 | 1444 | 37 | 38 | 37 | 36 | − 1368 |
| 38 | 39 | 40 | 39 | 1521 | 38 | 39 | 38 | 37 | − 1443 |
| 39 | 40 | 41 | 40 | 1600 | 39 | 40 | 39 | 38 | − 1520 |
| 40 | 41 | 42 | 41 | 1681 | 40 | 41 | 40 | 39 | − 1599 |
| 41 | 42 | 43 | 42 | 1764 | 41 | 42 | 41 | 40 | − 1680 |
| 42 | 43 | 44 | 43 | 1849 | 42 | 43 | 42 | 41 | − 1763 |
| 43 | 44 | 45 | 44 | 1936 | 43 | 44 | 43 | 42 | − 1848 |
| 44 | 45 | 46 | 45 | 2025 | 44 | 45 | 44 | 43 | − 1935 |
| 45 | 46 | 47 | 46 | 2116 | 45 | 46 | 45 | 44 | − 2024 |
| 46 | 47 | 48 | 47 | 2209 | 46 | 47 | 46 | 45 | − 2115 |
| 47 | 48 | 49 | 48 | 2304 | 47 | 48 | 47 | 46 | − 2208 |
| 48 | 49 | 50 | 49 | 2401 | 48 | 49 | 48 | 47 | − 2303 |
| 49 | 50 | 51 | 50 | 2500 | 49 | 50 | 49 | 48 | − 2400 |
| 50 | 51 | 52 | 51 | 2601 | 50 | 51 | 50 | 49 | − 2499 |

Getriebe. Das umlaufende Glied 66 dreht sich mit der Winkelgeschwindigkeit

$$\omega_3 = - \frac{\omega_1}{z-1}$$

wobei z die Anzahl der Außenrollen 67 ist, wenn sich der Exzenter 68 mit der Winkelgeschwindigkeit $\omega_1$ dreht. Das negative Vorzeichen bedeutet, daß der Exzenter 68 und die Umlaufscheibe 66 gegenläufig sind. Nach Fig. 7 und Fig. 11 kann jede Getriebestufe des Getriebes entsprechend zu der in Fig. 19 dargestellten mit einem Doppelexzenter und zwei Umlaufrädern konstruiert werden.

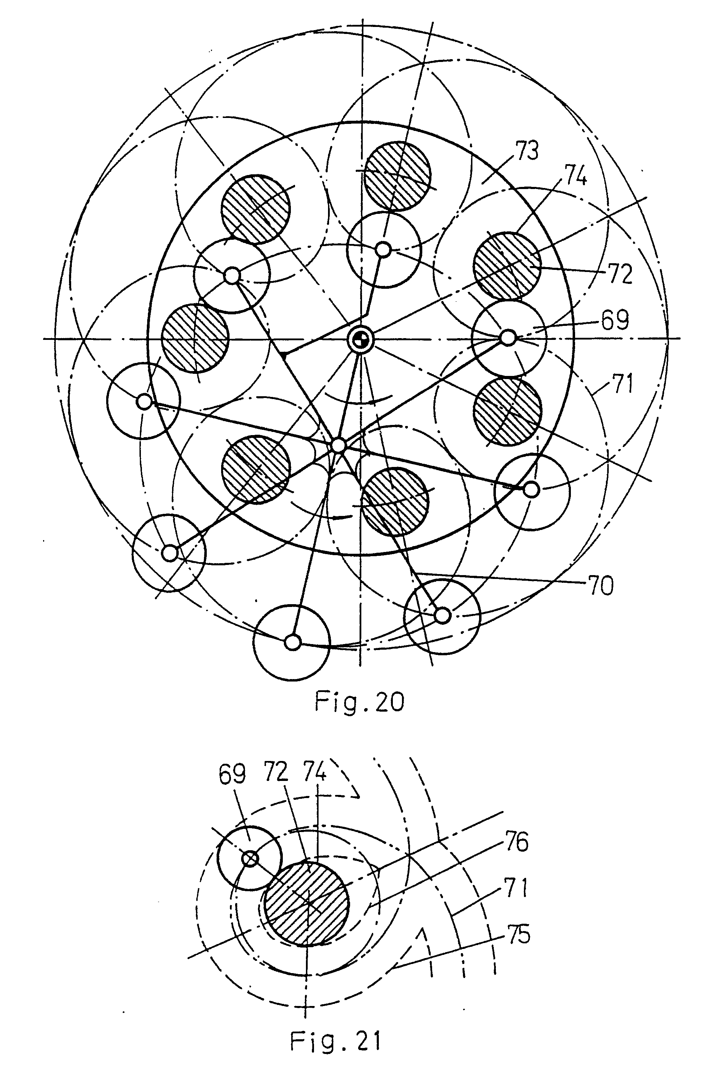

Die in der bisherigen Beschreibung eingeführten Konturen der Gegenflanken der Rollen haben komplizierte Formen und sind daher schwierig und teuer herzustellen. Es ist aber auch möglich, Teile dieser Konturen, die Äquidistanten zu Zykloiden sind, durch einfache Formen anzunähern. Dies ist bei verschlungen Epizykloiden durch Kreiszylinder möglich (Fig. 20).

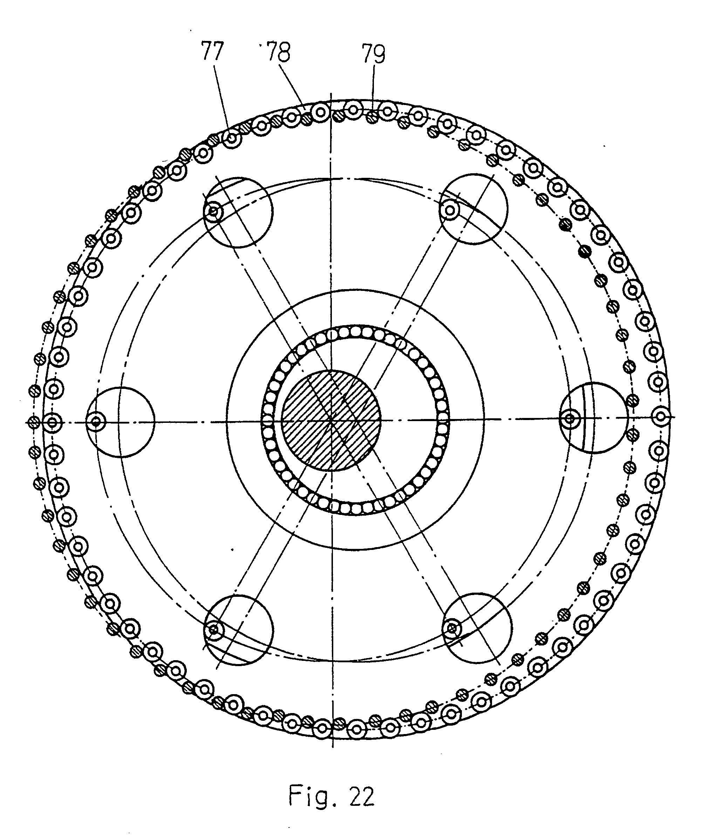

Die Mittelpunkte der kreiszylinderförmigen Rollen 69, die mit dem Umlaufrad 70 verbunden sind, durchlaufen eine verschlungene Epizykloide 71. Die kreiszylindrischen Bolzen 72, die mit dem Mittelrad 73 verbunden sind, bilden mit ihrer Außenkontur 74 eine gute Näherung eines Teils der Äquidistanten 75, 76 der Epizykloide 71 mit dem Abstand des halben Rollenradius (Fig.21).

Der Näherungskreis kann z.B. so gewählt werden, daß er an zwei Punkten die Epizykloide 71 berührt (Fig. 20). Die beiden Berührungspunkte der theoretischen Teilkontur und der Näherungskontur 74 können beispielsweise so gewählt werden, daß die Näherungskontur 74 einen größtmöglichen Radius erhält. In Fig. 22 wird der Schnitt senkrecht zur Antriebswelle eines möglichen Untersetzungsgetriebes gezeigt. Die Bolzen 77 sind mit dem Umlaufrad 78 verbunden und durchlaufen verschlungene Epizykloiden. Die Gegenflanken des Mittelrades werden durch die Bolzen 79 so gebildet, daß ihre Kontur die Äquidistanten der erzeugenden Zykloide jeweils in zwei Punkten berührt. Dabei wurde der maximal mögliche Radius der Bolzen gewählt.

Durch die Anordnung von Führungsbolzen ergibt sich in einfacher Weise für den Rollenkranz eine geschlossene Führungsbahn, ohne daß es der aufwendigen Herstellung eines geschlossenen Kurvenzuges bedarf. Da die ersten Rollen entlang der Führungsbahn um die Führungsbolzen herum geführt werden können, ergibt sich bei relativ großem Komplementwinkel zum Eingriffswinkel zwischen den Rollen und den Führungsbolzen und damit einer hohen Belastbarkeit bzw. Verschleißfestigkeit des Getriebes die Möglichkeit für eine Verminderung des Bauraumes. Dies ergibt sich daraus, daß bei dem erfindungsgemäßen Getriebe im Gegensatz zu den bekannten Getrieben die Rollen nicht stets an einer Seite einer geschlossenen Führungsbahn anliegen müssen.

## Ansprüche

1. Hochuntersetzendes Umlaufrädergetriebe mit mindestens einem Steg, der mit einem Glied eine in diesem ortsfeste Drehachse 0 bildet, und mit mindestens einem verzahnten, mit dem ersten Zahnrad kämmenden Umlaufrad, angetrieben vom Steg und schiebbar auf diesem angeordnet, wobei an der Eingriffstelle die Zähne des Umlaufrades oder des ersten Zahnrades eine runde Oberfläche und die jeweils anderen Zähne eine konvexe Oberfläche aufweisen, dadurch **gekennzeichnet,** daß die konvexe Oberfläche eine Äquidistante zur verschlungenen Zykloide ist, die sich aus der Radlinie der Mitte eines runden Zahnes ergibt.

2. Umlaufrädergetriebe nach Anspruch 1, dadurch **gekennzeichnet,** daß die Äquidistante durch Radien mit unterschiedlichen Abmessungen gebildet ist.

3. Hochuntersetzendes Umlaufrädergetriebe mit mindestens einem Steg, der in einer festen Achse drehbar gelagert ist und mindestens einem Mittelrad, das feststehend oder drehbar auf einer zu dieser Achse koaxialen Achse gelagert ist, und mit mindestens einem Umlaufrad, das drehbar auf dem Steg in einer dritten Achse gelagert ist, die exzentrisch und parallel zu der festen und der koaxialen Achse angeordnet ist, und das mit dem Mittelrad durch eine Zahnpaarung in Eingriff steht, deren Zahnformen aus Äquidistanten zu Zykloiden gebildet werden, dadurch **gekennzeichnet,** daß der eine Zahn einer sich in Eingriff befindlichen Zahnpaarung die Form eines Kreisbolzens (19) aufweist und der Gegenzahn (22, 60) des entsprechenden Zahnpaares (19, 22, 60, 61) die Kontur einer Äquidistanten einer verschlungenen Zykloide (18, 55) hat.

4. Umlaufrädergetriebe nach Anspruch 3, dadurch **gekennzeichnet,** daß der Gegenzahn einen Führungsbolzen (72) bildet, der eine einfache konvexe Kontur (74) aufweist, wobei mehrere solcher Führungsbolzen eine Führungsbahn bilden, deren Kontur teilweise die Äquidistante der verschlungenen Zykloide bildet.

5. Umlaufrädergetriebe nach Anspruch 4, dadurch **gekennzeichnet,** daß die Führungsbolzen (72) Kreiszylinder sind.

6. Umlaufrädergetriebe nach Anspruch 5, dadurch **gekennzeichnet,** daß die Kreiszylinder (72) mit dem Mittelrad (73) verbunden sind und mit kreiszylinderförmigen Rollen (69) des Umlaufrades (70) in Berührung treten, deren Mittelpunkte die verschlungene Epizykloide (71) durchlaufen, wobei die Außenkontur (74) der Führungsbolzen (72) einem Teil der Äquidistanten (75, 76) der Epizykloide (71) mit dem Abstand des halben Rollenradius angenähert ist.

7. Umlaufrädergetriebe nach Anspruch 6, dadurch **gekennzeichnet,** daß die Außenkontur (74) als Näherung eines Teils der Äquidistanten (75, 76) der Epizykloide (71) einen Näherungskreis bildet, der an zwei Punkten die Epizykloide (71) berührt.

Fig. 1

Fig. 2

Fig. 3

Fig. 4

EP 0 429 702 A1

Fig. 5

Fig.6

Fig. 7

Fig. 8

Fig. 9

Fig. 10

Fig. 11

Fig. 12

61

60

59

58

Fig.13

Fig. 14

Fig 15

Fig.16

Fig. 17

Fig. 18

Fig. 19

Fig.20

Fig.21

Fig. 22

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-3037400 (E.V.SUNDT)<br>* das ganze Dokument *<br>--- | 1-7 | F16H1/32<br>F16H55/08 |
| A | US-A-2750807 (KAZUSHIGE MIYAZAKI)<br>* Spalte 8, Zeile 44 - Spalte 10, Zeile 8; Figur 8 *<br>--- | 1-6 | |
| A | EP-A-0037287 (GAUNTGLEN)<br>* Zusammenfassung; Figur 1 *<br>* Seite 24, Zeile 17 - Seite 34, Zeile 22; Figuren 4-4d, 5 *<br>--- | 1-3 | |
| A | FR-A-1349898 (M.ERCOLI)<br>----- | | |

**RECHERCHIERTE SACHGEBIETE (Int. Cl.5 )**

F16H

Der vorliegende Recherchenbericht wurde für alle Patentansprüche erstellt

| Recherchenort | Abschlußdatum der Recherche | Prüfer |
|---|---|---|
| BERLIN | 04 JULI 1990 | GERTIG I. |